# EUROPÄISCHE PATENTSCHRIFT

(11) **EP 1 646 807 B1**
(45) Veröffentlichungstag und Bekanntmachung des Hinweises auf die Patenterteilung: **08.11.2006**
(21) Anmeldenummer: 04740363.9
(22) Anmeldetag: 28.06.2004
(51) Int. Cl.: F16H 3/66

(54) **AUTOMATISCH SCHALTBARES KRAFTFAHRZEUGGETRIEBE**
AUTOMATICALLY SHIFTABLE MOTOR VEHICLE TRANSMISSION
BOITE DE VITESSES AUTOMATIQUE POUR VEHICULE A MOTEUR

(30) Priorität: 23.07.2003 DE 10333433
(43) Veröffentlichungstag der Anmeldung: 19.04.2006
(73) Patentinhaber: ZF FRIEDRICHSHAFEN Aktiengesellschaft, 88038 Friedrichshafen (DE)
(72) Erfinder: DIOSI, Gabor, 88045 Friedrichshafen (DE); TIESLER, Peter, 88074 Meckenbeuren (DE)
(86) Internationale Anmeldenummer: PCT/EP2004/006961
(87) Internationale Veröffentlichungsnummer: WO 2005/019689

(56) Entgegenhaltungen:
- DE-B- 2 939 623
- GB-A- 1 522 616
- US-A- 4 070 927
- US-A- 6 053 839
- US-A1- 2004 116 237
- PATENT ABSTRACTS OF JAPAN vol. 014, no. 404 (M-1018), 31. August 1990 (1990-08-31) -& JP 02 154846 A (TOYOTA MOTOR CORP), 14. Juni 1990 (1990-06-14)
- LEI TIAN ET AL: "Matrix System for the analysis of planetary transmissions" JOURNAL OF MECHANICAL DESIGN, 1. Februar 2000 (2000-02-01), XP002287733
- KRSTICH A M: "TYPES OF KINEMATIC CONNECTIONS OF TWO SIMPLE PLANETARY THREE GEAR TRAINS" INTERNATIONAL JOURNAL OF VEHICLE DESIGN, ST HELIER,, GB, Bd. 11, Nr. 3, 1990, Seiten 314-321, XP008032692 ISSN: 0143-3369
- NADEL B A ET AL: "Automobile transmission design as a constraint satisfaction problem: first results" PROCEEDINGS OF THE CONFERENCE ON ARTIFICIAL INTELLIGENCE APPLICATIONS. MIAMI BEACH, FEB. 24 - 28, 1991, NEW YORK, IEEE, US, Bd. VOL. 2 CONF. 7, 24. Februar 1991 (1991-02-24), Seiten 248-256, XP010022615 ISBN: 0-8186-2135-4
- NADEL B A ET AL: "AUTOMOBILE TRANSMISSION DESIGN AS A CONSTRAINT SATISFACTION PROBLEM: MODELLING THE KINEMATIC LEVEL" ARTIFICIAL INTELLIGENCE FOR ENGINEERING DESIGN, ANALYSIS AND MANUFACTURING, LONDON, GB, Bd. 5, Nr. 3, 1991, Seiten 137-171, XP008032722

## Beschreibung

Die vorliegende Erfindung betrifft ein automatisch schaltbares Kraftfahrzeuggetriebe in Planetenbauweise gemäß dem Oberbegriff des Patentanspruchs 1.

Automatgetriebe, insbesondere für Kraftfahrzeuge, umfassen nach dem Stand der Technik üblicherweise Planetensätze, die mittels Reibungs- bzw. Schaltelementen wie etwa Kupplungen und Bremsen geschaltet werden und üblicherweise mit einem einer Schlupfwirkung unterliegenden und wahlweise mit einer Überbrückungskupplung versehenen Anfahrelement wie etwa einem hydrodynamischen Drehmomentwandler oder einer Strömungskupplung verbunden sind.

Ein derartiges Getriebe geht aus der EP 0 434 525 B1 hervor. Es umfasst im wesentlichen eine Antriebswelle und eine Abtriebswelle, die parallel zueinander angeordnet sind, einen konzentrisch zur Abtriebswelle angeordneten Doppelplanetenradsatz und fünf Schaltelemente in der Form von drei Kupplungen und zwei Bremsen, deren wahlweise Sperrung jeweils paarweise die verschiedenen Gangübersetzungen zwischen der Antriebswelle und der Abtriebswelle bestimmt. Hierbei weist das Getriebe einen Vorschaltradsatz und zwei Leistungswege auf, so dass durch das selektive paarweise Eingreifen der fünf Schaltelemente sechs Vorwärtsgänge erzielt werden.

Hierbei werden bei dem ersten Leistungsweg zwei Kupplungen zur Übertragung des Drehmomentes vom Vorschaltradsatz zu zwei Elementen des Doppelplanetenradsatzes benötigt. Diese sind in Kraftflussrichtung im wesentlichen hinter dem Vorschaltradsatz in Richtung Doppelplanetenradsatz angeordnet. Bei dem zweiten Leistungsweg ist eine weitere Kupplung vorgesehen, die diesen mit einem weiteren Element des Doppelplanetenradsatzes lösbar verbindet. Hierbei sind die Kupplungen derart angeordnet, dass der Innenlammelenträger den Abtrieb bildet.

Ein weiteres derartiges Planetengetriebe ist beispielsweise aus der US 4,070,927 bekannt, wobei die Anzahl der zur Verfügung stehenden Vorwärtsgänge jeweils um eins größer ist als die Anzahl der Reib- bzw. Schaltelemente. Jeder Gangwechsel zwischen den Vorwärtsgängen wird dadurch erreicht, dass jeweils eines der Reib- bzw. Schaltelemente zu- bzw. abgeschaltet wird. US 4,070,927 wird als nächstliegender Stand der Technik angesehen und offenbart ein automatisch Schaltbares Kraftfahrzeuggetriebe mit sieben Vorwärtsgängen.

Des weiteren ist aus der DE 199 12 480 A1 der Anmelderin ein automatisch schaltbares Kraftfahrzeuggetriebe mit drei Einsteg-Planetensätzen sowie drei Bremsen und zwei Kupplungen zum Schalten von sechs Vorwärtsgängen und einem Rückwärtsgang bekannt, bei dem die Antriebswelle direkt mit dem Sonnenrad des zweiten Planetensatzes verbunden ist und über die erste Kupplung mit dem Sonnenrad des ersten Planetensatzes und/oder über die zweite Kupplung mit dem Steg des ersten Planetensatzes verbindbar ist. Zusätzlich oder alternativ ist das Sonnenrad des ersten Planetensatzes über die erste Bremse mit dem Gehäuse des Getriebes und/oder der Steg des ersten Planetensatzes über die zweite Bremse mit dem Gehäuse und/oder das Sonnenrad des dritten Planetensatzes über die dritte Bremse mit dem Gehäuse verbindbar.

Ferner ist in der EP 1 265 006 A2 ein Sechs-Gang-Automatgetriebe in Planetenbauweise beschrieben, welches ebenfalls drei Bremsen und zwei Kupplungen umfasst, bei dem die einzelnen Gänge durch eine Kombination von jeweils zwei Schaltelementen realisierbar sind.

Automatisch schaltbare Fahrzeuggetriebe in Planetenbauweise im allgemeinen sind im Stand der Technik bereits vielfach beschrieben und unterliegen einer permanenten Weiterentwicklung und Verbesserung. So sollen diese Getriebe eine ausreichende Anzahl von Vorwärtsgängen sowie einen Rückwärtsgang und eine für Kraftfahrzeuge sehr gut geeignete Übersetzung mit einer hohen Gesamtspreizung sowie günstigen Stufensprüngen aufweisen. Ferner sollen diese eine hohe Anfahrübersetzung in Vorwärtsrichtung ermöglichen und einen direkten Gang enthalten sowie für den Einsatz sowohl in Pkw als auch Nkw geeignet sein. Außerdem sollen diese Getriebe einen geringen Bauaufwand, insbesondere eine geringe Anzahl an Schaltelementen erfordern und bei sequentieller Schaltweise Doppelschaltungen vermeiden, so daß bei Schaltungen in definierten Ganggruppen jeweils nur ein Schaltelement gewechselt wird.

Getriebe der eingangs genannten Art weisen in der Regel sechs Vorwärtsgänge auf; ein weiterer, siebter Gang würde in vorteilhafter Weise in mehr Komfort für den Fahrer sowie in einem optimierten Kraftstoffverbrauch resultieren. Zudem wird durch den siebten Gang eine sportliche Fahrweise optimal gewährleistet.

Der vorliegenden Erfindung liegt die Aufgabe zugrunde, ein Mehrstufengetriebe der eingangs genannten Art vorzuschlagen, bei dem mindestens sieben Vorwärtsgänge realisierbar sind. Hierbei sollen bei dem erfindungsgemäßen Mehrstufengetriebe geringe Momente auf die Schaltelemente und Planetensätze wirken sowie die Drehzahlen der Wellen, Schaltelemente und Planetensätze möglichst gering gehalten werden. Zudem soll das erfindungsgemäße Getriebe ein geringes Gewicht bei kompakten Abmessungen aufweisen. Außerdem soll eine beliebige Ausbildung und Anordnung eines Anfahrelements sowie des Antriebs und des Abtriebs ermöglicht werden.

Diese Aufgabe wird erfindungsgemäß durch die Merkmale des Patentanspruches 1 gelöst. Weitere Vorteile und vorteilhafte Ausgestaltungen gehen aus den Unteransprüchen hervor.

Demnach wird ein automatisch schaltbares Mehrstufengetriebe in Planetenbauweise vorgeschlagen, umfassend eine Antriebswelle und eine Abtriebswelle, welche in einem Gehäuse angeordnet sind, drei Einsteg-Planetensätze, mindestens sechs drehbare Wellen sowie mindestens sechs Schaltelemente, umfassend vorzugsweise drei Bremsen und drei Kupplungen, deren selektives Eingreifen (paarweise) verschiedene Übersetzungsverhältnisse zwischen der Antriebswelle und der Abtriebswelle bewirkt, sodass mindestens sieben Vorwärtsgänge und mindestens ein Rückwärtsgang realisierbar sind, bei dem die Antriebswelle ständig mit dem Sonnenrad des zweiten Planetensatzes verbunden ist, über eine Kupplung mit dem Steg des ersten Planetensatzes verbindbar ist und über eine weitere Kupplung mit einer fünften Welle verbindbar ist, welche einerseits ständig mit dem Sonnenrad des ersten Planetensatzes verbunden ist und andererseits über eine Bremse an das Gehäuse ankoppelbar ist. Des weiteren ist die Abtriebswelle ständig mit dem Steg des dritten Planetensatzes und dem Hohlrad des ersten Planetensatzes verbunden, wobei eine weitere dritte Welle ständig mit dem Sonnenrad des dritten Planetensatzes verbunden und durch eine Bremse an das Gehäuse ankoppelbar ist.

Ferner ist erfindungsgemäß eine weitere, vierte Welle ständig mit dem Hohlrad des zweiten Planetensatzes und dem Steg des ersten Planetensatzes verbunden und über eine Bremse an das Gehäuse ankoppelbar; eine weitere, sechste Welle ist ständig mit dem Hohlrad des dritten Planetensatzes und dem Steg des zweiten Planetensatzes verbunden. Erfindungsgemäß ist eine weitere Kupplung vorgesehen, welche die vierte Welle mit der Abtriebswelle oder der fünften Welle lösbar miteinander verbindet. Hierbei sind die Einsteg-Planetensätze vorzugsweise als Minus-Planetensätze ausgebildet.

Durch die erfindungsgemäße Ausgestaltung des Mehrstufengetriebes ergeben sich geeignete Übersetzungen sowie eine gegenüber dem Stand der Technik der erhebliche Erhöhung der Gesamtspreizung des Mehrstufengetriebes, wodurch eine verbesserte Anpassung der Gangstufen an die jeweiligen des Antriebsmotors, mit dem das Mehrstufengetriebes verbunden ist, im gesamten Fahrbereich des Kraftfahrzeugs bewirkt wird, mit der Folge einer verbesserten Fahrbarkeit des Kraftfahrzeugs und eine signifikanten Verbrauchsabsenkung. Zudem sind vergleichsweise günstige Stufensprünge und eine hohe Anfahrübersetzung in Vorwärtsrichtung realisierbar.

Das erfindungsgemäße Mehrstufengetriebe eignet sich für jedes Kraftfahrzeug, insbesondere für Personenkraftfahrzeuge (Pkw's) und für Nutzkraftfahrzeuge (Nkw's), wie z. B. Lastkraftwagen, Busse, Baufahrzeuge, Schienenfahrzeuge, Gleiskettenfahrzeuge und dergleichen.

Darüber hinaus wird mit dem erfindungsgemäßen Mehrstufengetriebe durch eine geringe Anzahl an Schaltelementen, vorzugsweise drei Kupplungen und drei Bremsen, der Bauaufwand erheblich reduziert. In vorteilhafter Weise ist es mit dem erfindungsgemäßen Mehrstufengetriebe möglich, ein Anfahren mit einem hydrodynamischen Wandler, einer externen Anfahrkupplung oder auch mit sonstigen geeigneten externen Anfahrelementen durchzuführen. Es ist auch denkbar, einen Anfahrvorgang mit einem im Getriebe integrierten Anfahrelement zu ermöglichen.

Erfindungsgemäß kann ein Gang, vorzugsweise der sechste Gang als direkter Gang ausgelegt sein; des weiteren werden bei sequentieller Schaltweise Doppelschaltungen und Gruppenschaltungen vermieden.

Die Antriebs- und die Abtriebswelle können dabei sowohl koaxial zueinander auf gegenüberliegenden Seiten als auch beide auf derselben Seite des Getriebegehäuses angeordnet sein. Ferner ist auch die Anordnung des Abtriebs zwischen den Planetensätzen und den Kupplungen möglich.

Weitere Ziele, Merkmale, Vorteile und Anwendungsmöglichkeiten der Erfindung ergeben sich aus der nachfolgenden Beschreibung der Ausführungsbeispiele, die in den Zeichnungen näher dargestellt sind. Dabei bilden alle beschriebenen und/oder bildlich dargestellten Merkmale für sich oder in beliebiger sinnvoller Kombination den Gegenstand der Erfindung, unabhängig von ihrer Zusammenfassung in den Ansprüchen und deren Rückbeziehung.

Es zeigen:
- Fig. 1: eine erste Ausführungsform eines erfindungsgemäßen Getriebes in schematischer Darstellung;
- Fig. 2: ein beispielhaftes Schaltschema für das in Fig. 1 dargestellte Getriebe;
- Fig. 3: eine zweite Ausführungsform eines erfindungsgemäßen Getriebes in schematischer Darstellung;
- Fig. 4: ein beispielhaftes Schaltschema für das in Fig. 3 dargestellten Getriebes;
- Fig. 5: eine Bauteil-Anordnungs-Variante für das in Fig. 1 dargestellte Getriebe in schematischer Darstellung; und
- Fig. 6: eine Bauteil-Anordnungs-Variante für das in Fig. 3 dargestellte Getriebe in schematischer Darstellung.

Gleiche Bauteile in unterschiedlichen Figuren oder Bauteile mit den gleichen Funktionen sind in den Figuren mit den selben Bezugszeichen versehen.

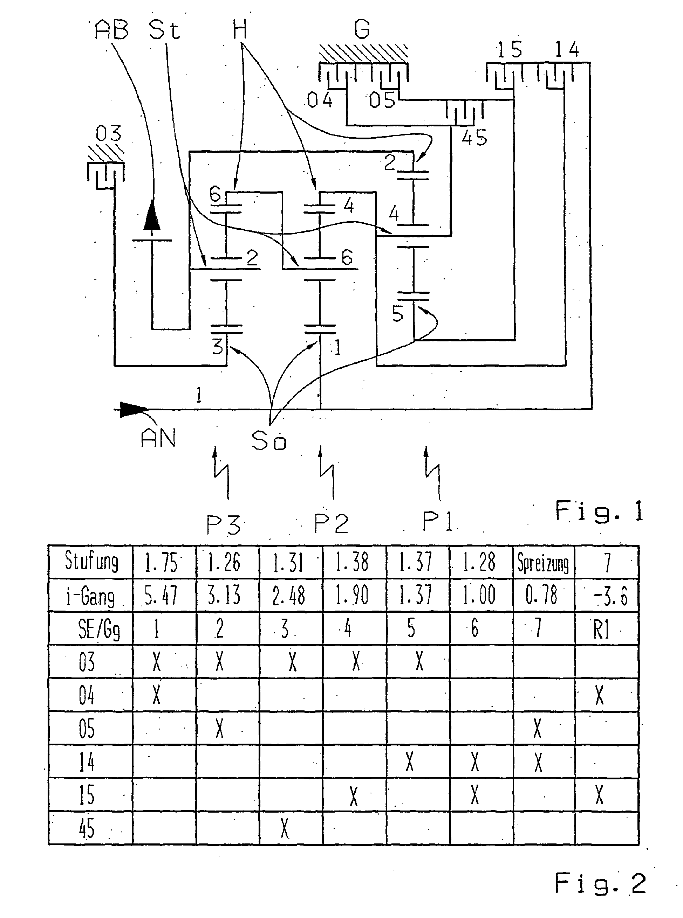

Ein erfindungsgemäßes Getriebe umfasst gemäß Fig. 1 im wesentlichen drei als Minus-Planetensätze ausgebildete Einsteg-Planetensätze P1, P2, P3, sechs drehbare Wellen 1, 2, 3, 4, 5, 6, drei Bremsen 03, 04, 05 und drei Kupplungen 14, 15, 45. Alle diese Bauteile sind innerhalb eines Gehäuses G angeordnet. Die Planetensätze P1, P2, P3 bestehen jeweils aus einem Sonnenrad, einem Steg mit Planetenrädern sowie einem Hohlrad. Dabei sind die drei Planetensätze P1, P2, P3 koaxial zueinander angeordnet, wobei der räumlich gesehen mittlere Planetensatz mit P2 bezeichnet ist. Im Rahmen des in Fig. 1 gezeigten Ausführungsbeispiels sind die Planetensätze wie folgt miteinander verbunden:

Die Antriebswelle 1 ist ständig mit dem Sonnenrad des zweiten Planetensatzes P2 verbunden und über eine Kupplung 14 mit dem Steg des ersten Planetensatzes P1 verbindbar; ferner ist die Antriebswelle 1 über eine weitere Kupplung 15 mit der Welle 5 verbindbar ist, welche einerseits ständig mit dem Sonnenrad des ersten Planetensatzes P1 verbunden ist und andererseits über eine Bremse 05 an das Gehäuse G ankoppelbar ist. Die Abtriebswelle 2 ist ständig mit dem Steg des dritten Planetensatzes P3 und dem Hohlrad des ersten Planetensatzes P1 verbunden und eine weitere Welle 3 ist ständig mit dem Sonnenrad des dritten Planetensatzes P3 verbunden und durch eine Bremse 03 an das Gehäuse G ankoppelbar. Eine weitere Welle 4 ist ständig mit dem Hohlrad des zweiten Planetensatzes P2 und dem Steg des ersten Planetensatzes P1 verbunden und über eine Bremse 04 an das Gehäuse G ankoppelbar. Des weiteren ist die Welle 6 ständig mit dem Hohlrad des dritten Planetensatzes P3 und dem Steg des zweiten Planetensatzes P2 verbunden. Gemäß der Erfindung ist eine Kupplung 45 vorgesehen, welche die Welle 4 mit der Welle 5 lösbar verbindet. Durch das Vorsehen dieser inneren Kupplung werden sieben Vorwärtsgänge realisiert.

Hierbei ist die Welle 4 in einem Bereich zwischen der Bremse 04 und dem Steg des ersten Planetensatzes P1 über die Kupplung 45 mit der Welle 5 lösbar verbindbar.

In Fig. 2 ist ein Schaltschema des erfindungsgemäßen Mehrstufengetriebes gemäß Fig. 1 dargestellt. Dem Schaltschema können die jeweiligen Übersetzungen i der einzelnen Gangstufen und die daraus zu bestimmenden Stufensprünge beispielhaft entnommen werden. Des weiteren kann dem Schaltschema entnommen werden, dass bei sequentieller Schaltweise Doppelschaltungen bzw. Gruppenschaltungen vermieden werden, da zwei benachbarte Gangstufen jeweils ein Schaltelement gemeinsam benutzen. Wie aus dem Schaltschema zu erkennen ist, besteht auch die Möglichkeit, ohne Gruppenschaltung Gänge zu überspringen. Der sechste Gang ist vorzugsweise als direkter Gang ausgebildet.

Für die ersten fünf Gänge ist die Bremse 03 ständig aktiviert; zusätzlich werden für den ersten Gang die Bremse 04, für den zweiten Gang die Bremse 05, für den dritten Gang die Kupplung 45, für den vierten Gang die Kupplung 15 und für den fünften Gang die Kupplung 14 geschlossen. Für den sechsten Gang müssen die Kupplungen 14 und 15 und für den siebten Gang die Kupplung 14 und die Bremse 5 geschlossen werden. Für den Rückwärtsgang wird die Bremse 04 und die Kupplung 15 geschlossen.

Die räumliche Anordnung der Schaltelemente im erfindungsgemäßen Getriebe kann beliebig sein und wird nur durch die Abmessungen und die äußere Formgebung begrenzt. In Verbindung mit einer nicht koaxialen - insbesondere einer achsparallelen - Anordnung von Antrieb AN und Abtrieb AB des Getriebes sind die Kupplungen 14, 15, 45 radial betrachtet vorzugsweise über den Planetensätzen P1, P2, P3 angeordnet. Bei der beispielhaften Ausführungsform gemäß Fig. 1 ist die Kupplung 45 radial betrachtet in etwa oberhalb des ersten (antiebsseitigen) Planetensatzes P1 und näher an diesem angeordnet als die Kupplungen 14 und 15. Der Innenlamellenträger der Kupplung 45 ist bevorzugt abtriebsseitig angeordnet, wobei eine (zur Vereinfachung nicht dargestellte) Servoeinrichtung der Kupplung 45 zwischen dem Lamellenpaket und dem Außenlamellenträger angeordnet sein kann. Vorzugsweise sind die Außenlamellenträger der Kupplungen 14 und 15 auch antriebsseitig angeordnet.

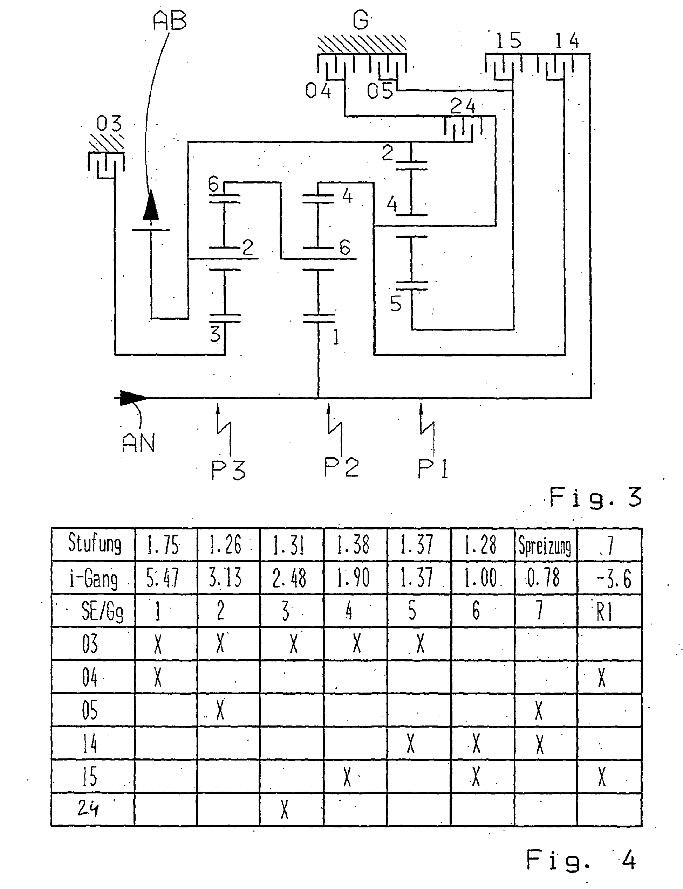

Die Getriebeausbildung gemäß der Darstellung in Fig. 3 entspricht im wesentlichen der Ausführungsform gemäß Fig. 1 mit dem Unterschied, dass die Welle 4 in einem Bereich zwischen der Bremse 04 und dem Steg des ersten Planetensatzes P1 über die Kupplung 24 mit der Abtriebswelle 2 lösbar verbindbar ist. Bei dieser Ausführungsform ist der Innenlamellenträger der Kupplung 24 bevorzugterweise abtriebsseitig angeordnet.

Aus Fig. 3 ist auch leicht ersichtlich, dass durch ein gleichzeitiges Schließen von Bremse 04 und Kupplung 24 ein sogenannter "Hillholder" für das Getriebe einfach darstellbar ist, durch den die Abtriebswelle 2 des Getriebes zum Gehäuse G hin verblockbar ist.

In Figur 4 ist ein Schaltschema des erfindungsgemäßen Mehrstufengetriebes gemäß Figur 3 dargestellt. Der einzige Unterschied zu dem Schaltschema gemäß Figur 2 besteht darin, dass anstelle der Kupplung 45 die Kupplung 24 vorgesehen und betätigt wird (dritter Gang).

Für die ersten fünf Gänge ist die Bremse 03 ständig aktiviert; zusätzlich werden für den ersten Gang die Bremse 04, für den zweiten Gang die Bremse 05, für den dritten Gang die Kupplung 24, für den vierten Gang die Kupplung 15 und für den fünften Gang die Kupplung 14 geschlossen. Für den sechsten Gang müssen die Kupplungen 14 und 15 und für den siebten Gang die Kupplung 14 und die Bremse 5 geschlossen werden. Für den Rückwärtsgang wird die Bremse 04 und die Kupplung 15 geschlossen.

Zeigen die zuvor beschriebenen beiden erfindungsgemäßen Ausführungsformen jeweils eine achsparallele Anordnung von Antrieb AN und Abtrieb AB des Getriebes, so werden im folgenden nun für beide Ausführungsformen jeweils eine Bauteil-Anordnungsvariante beschrieben, bei der Antrieb AN und Abtrieb AB koaxial zueinander angeordnet sind.

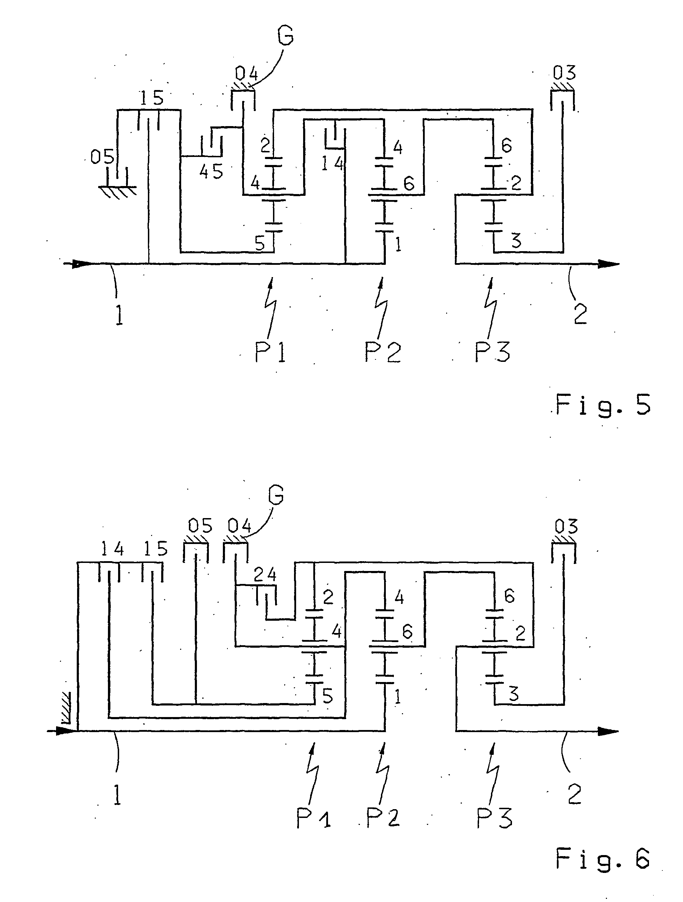

In Fig. 5 ist eine beispielhafte Bauteil-Anordnungs-Variante für das in Fig. 1 dargestellte Getriebe schematisch dargestellt. Die kinematische Koppelung der drei Planetensätze P1, P2, P2 und der sechs Schaltelemente 03, 04, 05, 14, 15, 45 ist also unverändert aus Fig. 1 übernommen. Wie bereits erwähnt, verlaufen Antrieb AN und Abtrieb AB des Getriebes im Unterschied zu Fig. 1 nunmehr koaxial zueinander. Der Antrieb AN des Getriebes ist demnach auf der dem zweiten (mittleren) Planetensatz P2 abgewandten Seite des ersten Planetensatzes P1 angeordnet und der Abtrieb AB des Getriebes auf der dem Antrieb AN gegenüberliegenden Seite des Getriebes, also auf der dem zweiten (mittleren) Planetensatz P2 abgewandten Seite des dritten Planetensatzes P3. Die Kupplung 14, über welche die Welle 4 mit der Antriebswelle 1 verbindbar ist, ist nunmehr axial zwischen den beiden Planetensätzen P1 und P2 angeordnet. Die beiden anderen Kupplungen 15 und 45 und auch die beiden Bremsen 04 und 05 sind auf der Antriebsseite des Getriebes angeordnet, also auf der dem mittleren Planetensatz P2 abgewandten Seite des ersten Planetensatzes P1. Dabei ist die Bremse 05 benachbart zur antriebsseitigen Außenwand des Gehäuses G angeordnet. Die beiden Kupplungen 15 und 45 sind benachbart zueinander angeordnet, wobei die Kupplung 45 näher am Planetensatz P1 angeordnet ist als die Kupplung 15. In dem in Fig. 5 dargestellten Beispiel sind Kupplung 45 und Bremse 04 räumlich gesehen benachbart zum ersten Planetensatz P1 angeordnet.

In einer anderen Ausgestaltung zur Bauteilanordnung kann beispielsweise auch vorgesehen sein, dass die Bremse 04 räumlich gesehen in einem Bereich radial über den Planetensätzen, insbesondere radial über dem ersten Planetensatz P1 angeordnet ist. Auch kann die Kupplung 45 in radialer Richtung gesehen unterhalb der Bremse 04 angeordnet sein. In noch einer anderen Ausgestaltung zur Bauteilanordnung können auch die Kupplungen 15 und 45 als eine vormontierbare Baugruppe mit einem gemeinsamen Lamellenträger zusammengefasst sein. Auch kann die Kupplung 15 räumlich gesehen radial oberhalb der Bremse 05 angeordnet sein oder die Bremse 05 - beispielsweise als Bandbremse - räumlich gesehen radial über der Kupplung 15.

Der Fachmann wird die räumliche Anordnung der jeweiligen Schaltelemente stets an die gegebenen Einbauräume für das Getriebe im Kraftfahrzeug anpassen.

Fig. 6 schließlich zeigt eine beispielhafte Bauteil-Anordnungs-Variante für das in Fig. 3 dargestellte Getriebe, in schematischer Darstellung. Die kinematische Koppelung der drei Planetensätze P1, P2, P2 und der sechs Schaltelemente 03, 04, 05, 14, 15, 24 ist also unverändert aus Fig. 3 übernommen. Wie bereits erwähnt, verlaufen Antrieb AN und Abtrieb AB des Getriebes im Unterschied zu Fig. 3 koaxial zueinander. Weiterhin sind jetzt alle Schaltelemente (04, 05, 14, 15, 24) mit Ausnahme der Bremse 03 auf der Antriebsseite des Getriebes angeordnet, also auf der Seite der ersten Planetensatzes P1, die dem zweiten Planetensatz P2 gegenüberliegt. Die Kupplung 24, über welche die Abtriebswelle 2 zusätzlich mit der Welle 4 verbindbar ist, grenzt an den ersten Planetensatz P1 an. Die beiden Kupplungen 14 und 15, insbesondere deren Lamellenpakete, sind nebeneinander angeordnet, wobei die Kupplung 14 an der antriebsseitigen Außenwand des Gehäuses G angrenzt. Dabei können die beiden Kupplungen 14, 15 auch als vormontierbare Baugruppe zusammengefasst sein, insbesondere mit einem gemeinsamen Lamellenträger. In einer anderen Ausgestaltung kann beispielsweise auch vorgesehen sein, dass die beiden Kupplungen 14, 15 ineinander verschachtelt angeordnet sind, wobei die Kupplung 14 vollständig innerhalb einer Kupplungsraumes angeordnet ist, der durch den für beide Kupplungen 14, 15 gemeinsamen Lamellenträger gebildet wird. Dabei können die Lamellen der Kupplung 15 räumlich gesehen radial über den Lamellen der Kupplung 14 angeordnet sein, aber auch axial neben den Lamellen der Kupplung 14. Die in dem in Fig. 6 beispielhaft axial zwischen den beiden Kupplungen 15 und 24 angeordneten Bremsen 04 und 05 können in einer anderen Ausgestaltung zur Bauteilanordnung auch räumlich gesehen radial über den Planetensätzen angeordnet sein

In allen Ausführungsformen des erfindungsgemäßen Getriebes können zusätzlich Freiläufe an jeder Stelle des Getriebes eingesetzt werden, so z. B. zwischen einer Welle und dem Gehäuse bzw. zwischen zwei Wellen, um eine Welle in zwei zu trennen. So dient ein zwischen Welle 3 und dem Gehäuse G zusätzlich eingesetzter Freilauf der Unterstützung der Bremse 03, ein zwischen Welle 4 und dem Gehäuse G zusätzlich eingesetzter Freilauf der Unterstützung der Bremse 04, und ein zwischen Welle 5 und dem Gehäuse G zusätzlich eingesetzter Freilauf der Unterstützung der Bremse 05. Ein derartiger Einsatz eines zusätzlichen Freilaufs parallel zu einem Schaltelement kann beispielsweise zur Verbesserung des Schaltkomforts bei Rückschaltung (Ausrollschaltungen) vorgesehen sein.

Ferner kann die Antriebswelle durch ein Kupplungselement vom Motor getrennt werden, wobei das Kupplungselement beispielsweise als trockene oder nasse Anfahrkupplung, als Magnetpulverkupplung, als Fliehkraftkupplung, als hydrodynamische Kupplung etc. ausgebildet sein kann.

Weiterhin kann die Antriebswelle auch durch ein Wandlungselement vom Motor getrennt werden, wobei dieses als hydrodynamischer Wandler, als Differentialwandler, als Anfahrretarder, als hydrostatisches Getriebe, als elektrisches Getriebe oder als elektro-mechanisches Getriebe oder ähnliches ausgebildet sein kann. Dies bedeutet, dass zwischen Motor und Getriebe eine zusätzliche Übersetzungsstufe mit einer konstanten oder auch einer variablen Übersetzung größer oder gleich eins vorgesehen werden kann.

Alternativ kann ein Anfahrelement auch in Kraftflussrichtung hinter dem Getriebe angeordnet sein, sodass die Antriebswelle fest mit der Koppelwelle eines Motors verbunden ist. In einem solchen Fall erfolgt das Anfahren durch ein Schaltelement des Getriebes, z. B. mittels der Bremse 04, die sowohl im ersten Vorwärtsgang als auch im Rückwärtsgang aktiviert ist.

Ferner kann eine verschleißfreie Bremse, beispielsweise ein hydraulischer oder elektrischer Retarder oder ähnliches, auf jeder Welle, bevorzugt jedoch auf der Antriebswelle 1 oder der Abtriebswelle 2, angeordnet sein.

Zudem ist es durch die erfindungsgemäße Bauweise möglich, Antrieb AN und Abtrieb AB sowohl für Quer-, Front-Längs-, Heck-Längs- oder Allradanordnungen auf der gleichen Seite des Getriebes bzw. des Getriebegehäuses G anzuordnen, als auch für Standardantriebe auf den gegenüberliegenden Seiten des Getriebes bzw. des Getriebegehäuses G. Auf der Antriebsseite oder auf der Abtriebsseite können zudem ein Achsdifferential und/oder ein Verteilerdifferential angeordnet werden. Antrieb AN und Abtrieb AB des erfindungsgemäßen Mehrstufengetriebes können also koaxial oder nicht koaxial (beispielsweise achsparallel oder winklig) zueinander angeordnet sein.

Des weiteren kann ein Nebenabtrieb zum Antrieb von zusätzlichen Aggregaten auf jeder Welle, bevorzugt aber auf der Antriebswelle 1 oder der Abtriebswelle 2, vorgesehen sein.

Die Schaltelemente selbst bestehen vorzugsweise aus lastschaltenden Kupplungen oder Bremsen, wie Lamellenkupplungen, Bandbremsen, Konuskupplungen oder ähnliche; sie können jedoch auch aus formschlüssigen Kupplungen oder Bremsen bestehen, beispielsweise Klauenkupplungen oder Synchronisierungen.

Ein weiterer Vorteil des hier vorgestellten Mehrstufengetriebes besteht darin, dass auf jeder Welle zusätzlich eine elektrische Maschine als Generator und/oder als zusätzliche Antriebsmaschine anbringbar ist.

Selbstverständlich fällt auch jede konstruktive Ausbildung, insbesondere jede räumliche Anordnung der Planetensätze und der Schaltelemente an sich sowie zueinander und soweit technisch sinnvoll, unter den Schutzumfang der vorliegenden Ansprüche ohne die Funktion des Getriebes, wie sie in den Ansprüchen angegeben ist, zu beeinflussen, auch wenn diese Ausbildungen nicht explizit in den Figuren oder in der Beschreibung dargestellt sind.

### Bezugszeichen

- 1: Welle
- 2: Welle
- 3: Welle
- 4: Welle
- 5: Welle
- 6: Welle

- 03: Bremse
- 04: Bremse
- 05: Bremse
- 14: Kupplung
- 15: Kupplung
- 24: Kupplung
- 45: Kupplung

- P1: Planetensatz
- P2: Planetensatz
- P3: Planetensatz

- i: Übersetzung

- G: Gehäuse

- AN: Antrieb
- AB: Abtrieb

## Patentansprüche

1. Automatisch schaltbares Kraftfahrzeuggetriebe in Planetenbauweise, insbesondere ein Automatgetriebe für ein Kraftfahrzeug, umfassend eine Antriebswelle (1) und eine Abtriebswelle (2), welche in einem Gehäuse (G) angeordnet sind, drei Einsteg-Planetensätze (P1, P2, P3), mindestens sechs drehbare Wellen (1, 2, 3, 4, 5, 6) sowie mindestens sechs Schaltelemente (03, 04, 05, 14, 15, 45, 24), umfassend Bremsen (03, 04, 05) und Kupplungen (14, 15, 24, 45), deren selektives Eingreifen verschiedene Übersetzungsverhältnisse zwischen der Antriebswelle (1) und der Abtriebswelle (2) bewirkt, sodass mindestens sieben Vorwärtsgänge realisierbar sind, wobei die Antriebswelle (1) ständig mit dem Sonnenrad des zweiten Planetensatzes (P2) verbunden und über eine erste Kupplung (14) mit dem Steg des ersten Planetensatzes (P1) verbindbar ist und über eine zweite Kupplung (15) mit einem fünften Welle (5) verbindbar ist, welche einerseits ständig mit dem Sonnenrad des ersten Planetensatzes (P1) verbunden ist und andererseits über eine erste Bremse (05) an das Gehäuse (G) ankoppelbar ist, wobei die Abtriebswelle (2) ständig mit dem Steg des dritten Planetensatzes (P3) und dem Hohlrad des ersten Planetensatzes (P1) verbunden ist, wobei eine dritte Welle (3) ständig mit dem Sonnenrad des dritten Planetensatzes (P3) verbunden ist und durch eine zweite Bremse (03) an das Gehäuse (G) ankoppelbar ist, eine vierte Welle (4) ständig mit dem Hohlrad des zweiten Planetensatzes (P2) und dem Steg des ersten Planetensatzes (P1) verbunden ist und über eine dritte Bremse (04) an das Gehäuse (G) ankoppelbar ist, wobei eine Sechste Welle (6) ständig mit dem Hohlrad des dritten Planetensatzes (P3) und dem Steg des zweiten Planetensatzes (P2) verbunden ist, und wobei eine dritte Kupplung (45, 24) vorgesehen ist, welche die vierte Welle (4) mit der fünften Welle (5) oder der Abtriebswelle (2) lösbar verbindet.

2. Automatisch schaltbares Kraftfahrzeuggetriebe nach Anspruch 1, **dadurch gekennzeichnet, dass** die vierte Welle (4) in einem Bereich zwischen der dritten Bremse (04) und dem Steg des ersten Planetensatzes (P1) über die dritte Kupplung (45, 24) mit der fünften Welle (5) oder der Abtriebswelle (2) lösbar verbindbar ist.

3. Automatisch schaltbares Kraftfahrzeuggetriebe nach Anspruch 1 oder 2, **dadurch gekennzeichnet, dass** durch selektives Schließen der Schaltelemente (03, 04, 05, 14, 15, 45 bzw. 24) sieben Vorwärtsgänge derart schaltbar sind, daß zum Umschalten von einem Gang in den nächstfolgend höheren oder nächstfolgend niedrigeren Gang von den gerade betätigten Schaltelementen jeweils nur ein Schaltelement geöffnet und ein weiteres Schaltelement geschlossen wird.

4. Automatisch schaltbares Kraftfahrzeuggetriebe nach Anspruch 1, 2 oder 3, **dadurch gekennzeichnet, dass** in dem ersten Vorwärtsgang die zweite und dritte Bremsen (03, 04), in dem zweiten Vorwärtsgang die erste und zweite Bremsen (03, 05), in dem dritten Vorwärtsgang die zweite Bremse (03) und die dritte Kupplung (45 bzw. 24), in dem vierten Vorwärtsgang die zweite Bremse (03) und die zweite Kupplung (15), in dem fünften Vorwärtsgang die zweite Bremse (03) und die erste Kupplung (14), in dem sechsten Vorwärtsgang die erste und zweite Kupplungen (14, 15), in dem siebten Vorwärtsgang die erste Bremse (05) und die erste Kupplung (14), und in einem Rückwärtsgang die dritte Bremse (04) und die zweite Kupplung (15) geschlossen sind.

5. Automatisch schaltbares Kraftfahrzeuggetriebe nach einem der vorangehenden Ansprüche, **dadurch gekennzeichnet, dass** die Planetensätze (P1, P2, P3) als Minus-Planetensätze ausgebildet sind.

6. Automatisch schaltbares Kraftfahrzeuggetriebe nach einem der vorangehenden Ansprüche, **dadurch gekennzeichnet, dass** die Kupplungen (14, 15, 45) radial betrachtet über den Planetensätzen (P1, P2, P3) angeordnet sind.

7. Automatisch schaltbares Kraftfahrzeuggetriebe nach einem der vorangehenden Ansprüche, **dadurch gekennzeichnet, dass** die dritte Kupplung (45) radial betrachtet in etwa oberhalb des ersten Planetensatzes (P1) und näher an diesen angeordnet ist, als die erste und zweite kupplungen (14, 15).

8. Automatisch schaltbares Kraftfahrzeuggetriebe nach einem der Ansprüche 1 bis 5, **dadurch gekennzeichnet, dass** die zweite und dritte Kupplungen (15, 45) auf der Seite des ersten Planetensatzes (P1) angeordnet sind, die dem zweiten Planetensatz (P2) gegenüberliegt, und dass die erste Kupplung (14) axial zwischen dem ersten und zweiten Planetensatz (P1, P2) angeordnet ist.

9. Automatisch schaltbares Kraftfahrzeuggetriebe nach einem der Ansprüche 1 bis 5, **dadurch gekennzeichnet, dass** die Kupplungen (14, 15, 24) auf der Seite des ersten Planetensatzes (P1) angeordnet sind, die dem zweiten Planetensatz (P2) gegenüberliegt.

10. Automatisch schaltbares Kraftfahrzeuggetriebe nach Anspruche 8 oder 9, **dadurch gekennzeichnet, dass** die dritte Kupplung (45 bzw. 24) näher am ersten Planetensatzes (P1) angeordnet ist als die zweite Kupplung (15).

11. Automatisch schaltbares Kraftfahrzeuggetriebe nach einem der Ansprüche 1 bis 5, **dadurch gekennzeichnet, dass** die dritte Kupplung (45 bzw. 24) an den ersten Planetensatzes (P1) angrenzt.

12. Automatisch schaltbares Kraftfahrzeuggetriebe nach einem der vorangehenden Ansprüche, **dadurch gekennzeichnet, dass** für den Fall von Lamellenkupplungen die Außenlamellenträger der Kupplungen (14, 15, 24, 45) antriebsseitig angeordnet sind.

13. Automatisch schaltbares Kraftfahrzeuggetriebe nach einem der vorangehenden Ansprüche, **dadurch gekennzeichnet, dass** die zweite Bremse (03) auf der Seite des dritten Planetensatzes (P3) angeordnet sind, die dem zweiten Planetensatz (P2) gegenüberliegt.

14. Automatisch schaltbares Kraftfahrzeuggetriebe nach einem der vorangehenden Ansprüche, **dadurch gekennzeichnet, dass** die dritte Bremse (04) und/oder die erste Bremse (05) radial betrachtet über den Planetensätzen (P1, P2, P3) angeordnet ist.

15. Automatisch schaltbares Kraftfahrzeuggetriebe nach Anspruch 14, **dadurch gekennzeichnet, dass** die erste Bremse (05) näher am ersten Planetensatz (P1) angeordnet ist als die dritte Bremse (04).

16. Automatisch schaltbares Kraftfahrzeuggetriebe nach Anspruch 14 oder 15, **dadurch gekennzeichnet, dass** die dritte Kupplung (45 bzw. 24) axial zwischen der ersten Bremse (05) und der zweiten Kupplung (15) angeordnet ist.

17. Automatisch schaltbares Kraftfahrzeuggetriebe nach einem der vorangehenden Ansprüche, **dadurch gekennzeichnet, dass** die dritte Bremse (04) und/oder die erste Bremse (05) auf der Seite des ersten Planetensatzes (P1) angeordnet ist, die dem zweiten Planetensatz (P2) gegenüberliegt.

18. Automatisch schaltbares Kraftfahrzeuggetriebe nach Anspruch 17, **dadurch gekennzeichnet, dass** die dritte (04) näher am ersten Planetensatzes (P1) angeordnet ist als die erste Bremse (05).

19. Automatisch schaltbares Kraftfahrzeuggetriebe nach einem der vorangehenden Ansprüche, **dadurch gekennzeichnet, dass** die zweite und dritte Kupplungen (15, 45) benachbart zueinander angeordnet sind.

20. Automatisch schaltbares Kraftfahrzeuggetriebe nach einem der vorangehenden Ansprüche, **dadurch gekennzeichnet, dass** mindestens ein zusätzlicher Freilauf zwischen einer der Wellen (1, 2, 3, 4, 5, 6) und dem Gehäuse (G) vorgesehen ist.

21. Automatisch schaltbares Kraftfahrzeuggetriebe nach einem der vorangehenden Ansprüche, **dadurch gekennzeichnet, dass** Antrieb (AN) und Abtrieb (AB) des Getriebes koaxial zueinander angeordnet sind.

22. Automatisch schaltbares Kraftfahrzeuggetriebe nach einem der Ansprüche 1 bis 20, **dadurch gekennzeichnet , dass** Antrieb (AN) und Abtrieb (AB) des Getriebes nicht koaxial zueinander angeordnet sind, insbesondere dass Antrieb (AN) und Abtrieb (AB) des Getriebes achsparallel oder winklig zueinander verlaufen.

23. Automatisch schaltbares Kraftfahrzeuggetriebe nach Anspruch 22, **dadurch gekennzeichnet, dass** Antrieb (AN) und Abtrieb (AB) auf der gleichen Seite des Gehäuses (G) vorgesehen sind.

24. Automatisch schaltbares Kraftfahrzeuggetriebe nach einem der vorangehenden Ansprüche, **dadurch gekennzeichnet, dass** ein Achs- und/oder ein Verteilerdifferential auf der Antriebsseite oder der Abtriebsseite des Getriebes angeordnet ist.

25. Automatisch schaltbares Kraftfahrzeuggetriebe nach einem der vorangehenden Ansprüche, **dadurch gekennzeichnet, dass** die Antriebswelle (1) durch ein Kupplungselement oder ein Wandlungselement von einem Antriebs-Motor trennbar ist.

26. Automatisch schaltbares Kraftfahrzeuggetriebe nach Anspruch 25, **dadurch gekennzeichnet, dass** als Wandlungselement bzw. Kupplungselement ein hydrodynamischer Wandler, ein Differenfialwandier, ein Anfahrretarder, ein hydrostatisches Getriebe, ein elektrisches Getriebe, ein elektromechanisches Getriebe bzw. eine hydrodynamische Kupplung, eine trockene Anfahrkupplung, eine nasse Anfahrkupplung, eine Magnetpulverkupplung oder eine Fliehkraftkupplung vorgesehen ist.

27. Automatisch schaltbares Kraftfahrzeuggetriebe nach einem der vorangehenden Ansprüche, **dadurch gekennzeichnet, dass** in Kraftflussrichtung hinter dem Getriebe ein Anfahrelement anordbar ist, wobei die Antriebswelle (1) fest mit der Kurbelwelle eines Motors verbunden ist.

28. Automatisch schaltbares Kraftfahrzeuggetriebe nach Anspruch 27, **dadurch gekennzeichnet, dass** das Anfahren mittels eines im Getriebe integrierten Schaltelementes (04) erfolgt.

29. Automatisch schaltbares Kraftfahrzeuggetriebe nach einem der vorangehenden Ansprüche, **dadurch gekennzeichnet, dass** die dritte Kupplung (24), über welche die vierte Welle (4) mit der Abtriebswelle (2) verbindbar ist, zusammen mit der dritten Bremse (04) einen Hillholder für das Getriebe bildet zum Festsetzen der Abtriebswelle (2) an dem Gehäuse (G).

30. Automatisch schaltbares Kraftfahrzeuggetriebe nach einem der vorangehenden Ansprüche, **dadurch gekennzeichnet, dass** auf jeder Welle eine verschleißfreie Bremse anordbar ist.

31. Automatisch schaltbares Kraftfahrzeuggetriebe nach einem der vorangehenden Ansprüche, **dadurch gekennzeichnet, dass** zum Antrieb von zusätzlichen Aggregaten auf jeder Welle ein Nebenabtrieb anordbar ist.

32. Automatisch schaltbares Kraftfahrzeuggetriebe nach Anspruch 31, **dadurch gekennzeichnet, dass** der Antrieb (AN) des Getriebes und der Nebenabtrieb auf der gleichen Seite des Getriebes bzw. des Gehäuses (G) angeordnet sind.

33. Automatisch schaltbares Kraftfahrzeuggetriebe nach einem der vorangehenden Ansprüche, **dadurch gekennzeichnet, dass** die Schaltelemente (03, 04, 05, 14, 15, 45, 24) als lastschaltende Kupplungen oder Bremsen ausgebildet sind.

34. Automatisch schaltbares Kraftfahrzeuggetriebe nach Anspruch 33, **dadurch gekennzeichnet, dass** Lameftenkupplungen, Bandbremsen und/oder Konuskupplungen einsetzbar sind.

35. Automatisch schaltbares Kraftfahrzeuggetriebe nach einem der vorangehenden Ansprüche, **dadurch gekennzeichnet, dass** auf jeder Welle des Getriebes zusätzlich eine elektrische Maschine als Generator und/oder als zusätzliche Antriebsmaschine anbringbar ist.

## Claims

1. Automatically shiftable motor vehicle transmission of a planetary design, in particular an automatic transmission for a motor vehicle, comprising an input shaft (1) and an output shaft (2), which are disposed in a housing (G), three single-web planetary gear sets (P1, P2, P3), at least six rotatable shafts (1, 2, 3, 4, 5, 6) and at least six shift elements (03, 04, 05, 14, 15, 45, 24), comprising brakes (03, 04, 05) and clutches (14, 15, 24, 45), the selective engagement of which brings about various reduction ratios between the input shaft (1) and the output shaft (2), so that at least seven forward gears are realizable, wherein the input shaft (1) is permanently connected to the sun gear of the second planetary gear set (P2) and is connectable by a first clutch (14) to the web of the first planetary gear set (P1) and is connectable by a second clutch (15) to a fifth shaft (5), which is connected at one end permanently to the sun gear of the first planetary gear set (P1) and is connectable at the other end by a first brake (05) to the housing (G), wherein the output shaft (2) is connected permanently to the web of the third planetary gear set (P3) and the ring gear of the first planetary gear set (P1), wherein a third shaft (3) is connected permanently to the sun gear of the third planetary gear set (P3) and is connectable by a second brake (03) to the housing (G), a fourth shaft (4) is connected permanently to the ring gear of the second planetary gear set (P2) and the web of the first planetary gear set (P1) and is connectable by a third brake (04) to the housing (G), wherein a sixth shaft (6) is connected permanently to the ring gear of the third planetary gear set (P3) and the web of the second planetary gear set (P2), and wherein a third clutch (45, 24) is provided, which detachably connects the fourth shaft (4) to the fifth shaft (5) or to the output shaft (2).

2. Automatically shiftable motor vehicle transmission according to claim 1, **characterized in that** the fourth shaft (4) in a region between the third brake (04) and the web of the first planetary gear set (P1) is detachably connectable by the third clutch (45, 24) to the fifth shaft (5) or to the output shaft (2).

3. Automatically shiftable motor vehicle transmission according to claim 1 or 2, **characterized in that** by selective closing of the shift elements (03, 04, 05, 14, 15, 45 and/or 24) seven forward gears are selectable in such a way that, for changing from one gear to the next higher or next lower gear, of the just actuated shift elements in each case only one shift element is opened and a further shift element is closed.

4. Automatically shiftable motor vehicle transmission according to claim 1, 2 or 3, **characterized in that** in the first forward gear the second and third brakes (03, 04), in the second forward gear the first and second brakes (03, 05), in the third forward gear the second brake (03) and the third clutch (45 and/or 24), in the fourth forward gear the second brake (03) and the second clutch (15), in the fifth forward gear the second brake (03) and the first clutch (14), in the sixth forward gear the first and second clutches (14, 15), in the seventh forward gear the first brake (05) and the first clutch (14), and in a reverse gear the third brake (04) and the second clutch (15) are closed.

5. Automatically shiftable motor vehicle transmission according to one of the preceding claims, **characterized in that** the planetary gear sets (P1, P2, P3) are designed as minus planetary gear sets.

6. Automatically shiftable motor vehicle transmission according to one of the preceding claims, **characterized in that** the clutches (14, 15, 45) are disposed, viewed radially, above the planetary gear sets (P1, P2, P3).

7. Automatically shiftable motor vehicle transmission according to one of the preceding claims, **characterized in that** the third clutch (45) is disposed, viewed radially, approximately above the first planetary gear set (P1) and nearer thereto than the first and second clutches (14, 15).

8. Automatically shiftable motor vehicle transmission according to one of claims 1 to 5, **characterized in that** the second and third clutches (15, 45) are disposed on the side of the first planetary gear set (P1) lying opposite the second planetary gear set (P2), and that the first clutch (14) is disposed axially between the first and second planetary gear set (P1, P2).

9. Automatically shiftable motor vehicle transmission according to one of claims 1 to 5, **characterized in that** the clutches (14, 15, 24) are disposed on the side of the first planetary gear set (P1) lying opposite the second planetary gear set (P2).

10. Automatically shiftable motor vehicle transmission according to claim 8 or 9, **characterized in that** the third clutch (45 and/or 24) is disposed nearer to the first planetary gear set (P1) than the second clutch (15).

11. Automatically shiftable motor vehicle transmission according to one of claims 1 to 5, **characterized in that** the third clutch (45 and/or 24) adjoins the first planetary gear set (P1).

12. Automatically shiftable motor vehicle transmission according to one of the preceding claims, **characterized in that**, in the case of multi-disc clutches, the outer disc carriers of the clutches (14, 15, 24, 45) are disposed on the input side.

13. Automatically shiftable motor vehicle transmission according to one of the preceding claims, **characterized in that** the second brake (03) are disposed on the side of the third planetary gear set (P3) lying opposite the second planetary gear set (P2).

14. Automatically shiftable motor vehicle transmission according to one of the preceding claims, **characterized in that** the third brake (04) and/or the first brake (05) is disposed, viewed radially, above the planetary gear sets (P1, P2, P3).

15. Automatically shiftable motor vehicle transmission according to claim 14, **characterized in that** the first brake (05) is disposed nearer to the first planetary gear set (P1) than the third brake (04).

16. Automatically shiftable motor vehicle transmission according to claim 14 or 15, **characterized in that** the third clutch (45 and/or 24) is disposed axially between the first brake (05) and the second clutch (15).

17. Automatically shiftable motor vehicle transmission according to one of the preceding claims, **characterized in that** the third brake (04) and/or the first brake (05) is disposed on the side of the first planetary gear set (P1) lying opposite the second planetary gear set (P2).

18. Automatically shiftable motor vehicle transmission according to claim 17, **characterized in that** the third brake (04) is disposed nearer to the first planetary gear set (P1) than the first brake (05).

19. Automatically shiftable motor vehicle transmission according to one of the preceding claims, **characterized in that** the second and third clutches (15, 45) are disposed adjacent to one another.

20. Automatically shiftable motor vehicle transmission according to one of the preceding claims, **characterized in that** at least one additional free-wheel is provided between one of the shafts (1, 2, 3, 4, 5, 6) and the housing (G).

21. Automatically shiftable motor vehicle transmission according to one of the preceding claims, **characterized in that** input (AN) and output (AB) of the transmission are disposed coaxially with one another.

22. Automatically shiftable motor vehicle transmission according to one of claims 1 to 20, **characterized in that** input (AN) and output (AB) of the transmission are disposed non-coaxially with one another, in particular that input (AN) and output (AB) of the transmission extend paraxially or at an angle to one another.

23. Automatically shiftable motor vehicle transmission according to claim 22, **characterized in that** input (AN) and output (AB) are provided on the same side of the housing (G).

24. Automatically shiftable motor vehicle transmission according to one of the preceding claims, **characterized in that** an axle differential and/or a transfer differential is disposed on the input side or the output side of the transmission.

25. Automatically shiftable motor vehicle transmission according to one of the preceding claims, **characterized in that** the input shaft (1) is separable from a prime mover by a clutch element or a conversion element.

26. Automatically shiftable motor vehicle transmission according to claim 25, **characterized in that** as a conversion element and/or clutch element a hydrodynamic converter, a torque divider, a starting retarder, a hydrostatic gear, an electric gear, an electromechanical gear and/or a hydrodynamic clutch, a dry starting clutch, a wet starting clutch, a magnetic powder clutch or a centrifugal clutch is provided.

27. Automatically shiftable motor vehicle transmission according to one of the preceding claims, **characterized in that** in power flow direction downstream of the transmission a starting element may be disposed, wherein the input shaft (1) is firmly connected to the crankshaft of an engine.

28. Automatically shiftable motor vehicle transmission according to claim 27, **characterized in that** starting is effected by means of a shift element (04) integrated in the transmission.

29. Automatically shiftable motor vehicle transmission according to one of the preceding claims, **characterized in that** the third clutch (24), by which the fourth shaft (4) is connectable to the output shaft (2), together with the third brake (04) forms a hillholder for the transmission for fixing the output shaft (2) to the housing (G).

30. Automatically shiftable motor vehicle transmission according to one of the preceding claims, **characterized in that** on each shaft a wear-free brake may be disposed.

31. Automatically shiftable motor vehicle transmission according to one of the preceding claims, **characterized in that** for driving additional units an auxiliary output may be disposed on each shaft.

32. Automatically shiftable motor vehicle transmission according to claim 31, **characterized in that** the input (AN) of the transmission and the auxiliary output are disposed on the same side of the transmission and/or housing (G).

33. Automatically shiftable motor vehicle transmission according to one of the preceding claims, **characterized in that** the shift elements (03, 04, 05, 14, 15, 45, 24) are designed as powershift clutches or brakes.

34. Automatically shiftable motor vehicle transmission according to claim 33, **characterized in that** multi-disc clutches, band brakes and/or cone clutches are usable.

35. Automatically shiftable motor vehicle transmission according to one of the preceding claims, **characterized in that** on each shaft of the transmission an electric machine is additionally mountable as a generator and/or as an additional prime mover.

## Revendications

1. Transmission de véhicule automobile à changement de rapport automatique du type épicycloïdal, en particulier transmission automatique pour un véhicule automobile, comprenant un arbre d'entrée (1) et un arbre de sortie (2) qui sont disposés dans un carter (G), trois trains épicycloïdaux à un porte-satellites (P1, P2, P3), au moins six arbres rotatifs (1, 2, 3, 4, 5, 6) ainsi qu'au moins six éléments de commande (03, 04, 05, 14, 15, 45, 24), qui comprennent des freins (03, 04, 05) et des embrayages (14, 15, 24, 45) dont la fermeture sélective donne différents rapports de transmission entre l'arbre d'entrée (1) et l'arbre de sortie (2), de sorte qu'on peut au moins réaliser sept vitesses de marche avant, dans laquelle l'arbre d'entrée (1) est relié en permanence à la roue planétaire du deuxième train épicycloïdal (P2) et peut être relié par l'intermédiaire d'un premier embrayage (14) au porte-satellites du premier train épicycloïdal (P1) et, par l'intermédiaire d'un deuxième embrayage (15), à un cinquième arbre (5) qui, d'une part, est relié en permanence à la roue planétaire du premier train épicycloïdal (P1) et, d'autre part, peut être accouplé au carter (G) par l'intermédiaire d'un premier frein (05), dans laquelle l'arbre de sortie (2) est relié en permanence au porte-satellites du troisième train épicycloïdal (P3) et à la couronne à denture intérieure du premier train épicycloïdal (P1), dans laquelle un troisième arbre (3) est relié en permanence à la roue planétaire du troisième train épicycloïdal (P3) et peut être accouplé au carter (G) par un deuxième frein (03), un quatrième arbre (4) est relié en permanence à la couronne à denture intérieure du deuxième train épicycloïdal (P2) et au porte-satellites du premier train épicycloïdal (P1) et peut être accouplé au carter (G) par l'intermédiaire d'un troisième frein (04), dans laquelle un sixième arbre (6) est relié en permanence à la couronne à denture intérieure du troisième train épicycloïdal (P3) et au porte-satellites du deuxième train épicycloïdal (P2) et dans laquelle il est prévu un troisième embrayage (45, 24) qui relie le quatrième arbre (4) au cinquième arbre (5) ou à l'arbre de sortie (2) de façon séparable.

2. Transmission de véhicule automobile à changement de rapport automatique selon la revendication 1, **caractérisée en ce que** le quatrième arbre (4) peut être relié de façon séparable au cinquième arbre (5) ou à l'arbre de sortie (2) par l'intermédiaire du troisième embrayage (45, 24) dans une zone située entre le troisième frein (04) et le porte-satellites du premier train épicycloïdal (P1).

3. Transmission de véhicule automobile à changement de rapport automatique selon la revendication 1 ou 2, **caractérisée en ce que**, par fermeture sélective des éléments de commande (03, 04, 05, 14, 15, 45 ou 24), sept vitesses de marche avant peuvent être enclenchées, ce qui produit que, à chaque fois, pour passer d'une vitesse à la vitesse immédiatement supérieure ou à la vitesse immédiatement inférieure, un seul élément parmi les éléments de commande qui sont actionnés à ce moment s'ouvre et un seul autre se ferme.

4. Transmission de véhicule automobile à changement de rapport automatique selon la revendication 1, 2 ou 3, **caractérisée en ce que**, dans la première vitesse de marche avant, les deuxième et troisième freins (03, 04) sont fermés, dans la deuxième vitesse de marche avant, les premier et deuxième freins (03, 05) sont fermés, dans la troisième vitesse de marche avant, le deuxième frein (03) et le troisième embrayage (45 ou 24) sont fermés, dans la quatrième vitesse de marche avant, le deuxième frein (03) et le deuxième embrayage (15) sont fermés, dans la cinquième vitesse de marche avant, le deuxième frein (03) et le premier embrayage (14) sont fermés, dans la sixième vitesse de marche avant, les premier et deuxième embrayages (14, 15) sont fermés, dans la septième vitesse de marche avant, le premier frein (05) et le premier embrayage (14) sont fermés et, dans une vitesse de marche arrière, le troisième frein (04) et le deuxième embrayage (15) sont fermés.

5. Transmission de véhicule automobile à changement de rapport automatique selon l'une des revendications précédentes, **caractérisée en ce que** les trains épicycloïdaux (P1, P2, P3) sont constitués par des trains épicycloïdaux réducteurs.

6. Transmission de véhicule automobile à changement de rapport automatique selon l'une des revendications précédentes, **caractérisée en ce que**, vus dans la direction radiale, les embrayages (14, 15, 45) sont disposés au-dessus des trains épicycloïdaux (P1, P2, P3).

7. Transmission de véhicule automobile à changement de rapport automatique selon l'une des revendications précédentes, **caractérisée en ce que**, vu dans la direction radiale, le troisième embrayage (45) est disposé à peu près au-dessus du premier train épicycloïdal (P1), et plus près de celui-ci que les premier et deuxième embrayages (14, 15).

8. Transmission de véhicule automobile à changement de rapport automatique selon l'une des revendications 1 à 5, **caractérisée en ce que** les deuxième et troisième embrayages (14, 45) sont disposés sur le côté du premier train épicycloïdal (P1) qui fait face au deuxième train épicycloïdal (P2), et **en ce que** le premier embrayage (14) est disposé axialement entre les premier et deuxième trains épicycloïdaux (P1, P2).

9. Transmission de véhicule automobile à changement de rapport automatique selon l'une des revendications 1 à 5, **caractérisée en ce que** les embrayages (14, 15, 24) sont disposés sur le côté du premier train épicycloïdal (P1) qui fait face au deuxième train épicycloïdal (P2).

10. Transmission de véhicule automobile à changement de rapport automatique selon la revendication 8 ou 9, **caractérisée en ce que le** troisième embrayage (45 ou 24) est disposé plus prés du premier train épicycloïdal (P1) que le deuxième embrayage (15).

11. Transmission de véhicule automobile à changement de rapport automatique selon l'une des revendications 1 à 5, **caractérisée en ce que le** troisième embrayage (45 ou 24) est adjacent au premier train épicycloïdal (P1).

12. Transmission de véhicule automobile à changement de rapport automatique selon l'une des revendications précédentes, **caractérisée en ce que**, pour le cas d'embrayages à disques, les supports de disques extérieurs des embrayages (14, 15, 24, 45) sont disposés côté entrée.

13. Transmission de véhicule automobile à changement de rapport automatique selon l'une des revendications précédentes, **caractérisée en ce que** le deuxième frein (03) est disposé sur le côté du troisième train épicycloïdal (P3) qui fait face au deuxième train épicycloïdal (P2).

14. Transmission de véhicule automobile à changement de rapport automatique selon l'une des revendications précédentes, **caractérisée en ce que**, vu dans la direction radiale, le troisième frein (04) et/ou le premier frein (05) et/ou sont disposé(s) au-dessus des trains épicycloïdaux (P1, P2, P3).

15. Transmission de véhicule automobile à changement de rapport automatique selon la revendication 14, **caractérisée en ce que** le premier frein (05) est disposé plus prés du premier train épicycloïdal (P1) que le troisième frein (04).

16. Transmission de véhicule automobile à changement de rapport automatique selon la revendication 14 ou 15, **caractérisée en ce que** le troisième embrayage (45 ou 24) est disposé axialement entre le premier frein (05) et le deuxième embrayage (15).

17. Transmission de véhicule automobile à changement de rapport automatique selon l'une des revendications précédentes, **caractérisée en ce que** le troisième frein (04) et/ou le premier frein (05) est ou sont disposé(s) sur le côté du premier train épicycloïdal (P1) qui fait face au deuxième train épicycloïdal (P2).

18. Transmission de véhicule automobile à changement de rapport automatique selon la revendication 17, **caractérisée en ce que** le troisième frein (04) est disposé plus prés du premier train épicycloïdal (P1) que le premier frein (05).

19. Transmission de véhicule automobile à changement de rapport automatique selon l'une des revendications précédentes, **caractérisée en ce que** les deuxième et troisième embrayages (15, 45) sont disposés l'un près de l'autre.

20. Transmission de véhicule automobile à changement de rapport automatique selon l'une des revendications précédentes, **caractérisée en ce qu**'au moins une roue libre additionnelle est prévue entre un des arbres (1, 2, 3, 4, 5, 6) et le carter (G).

21. Transmission de véhicule automobile à changement de rapport automatique selon l'une des revendications précédentes, **caractérisée en ce que** l'entrée (AN) et la sortie (AB) de la transmission sont disposées coaxialement entre elles.

22. Transmission de véhicule automobile à changement de rapport automatique selon l'une des revendications 1 à 20, **caractérisée en ce que** l'entrée (AN) et la sortie (AB) de la transmission ne sont pas disposées coaxialement l'une à l'autre et, en particulier, l'entrée (AN) et la sortie (AB) de la transmission ont leurs axes parallèles ou forment un angle l'une par rapport à l'autre.

23. Transmission de véhicule automobile à changement de rapport automatique selon la revendication 22, **caractérisée en ce qu**e l'entrée (AN) et la sortie (AB) sont prévues sur le même côté du carter (G).

24. Transmission de véhicule automobile à changement de rapport automatique selon l'une des revendications précédentes, **caractérisée en ce qu**'un arbre et/ou un différentiel répartiteur est ou sont disposés sur le côté d'entrée ou sur le côté de sortie de la transmission.

25. Transmission de véhicule automobile à changement de rapport automatique selon l'une des revendications précédentes, **caractérisée en ce que** l'arbre d'entrée (1) peut être séparé d'un moteur d'entraînement par un élément d'embrayage ou d'un élément convertisseur.

26. Transmission de véhicule automobile à changement de rapport automatique selon la revendication 25, **caractérisée en ce que**, comme élément convertisseur ou élément d'embrayage, il est prévu un convertisseur hydrodynamique, un convertisseur différentiel, un ralentisseur de démarrage, une transmission hydrostatique, une transmission électrique, une transmission électromécanique, ou un embrayage hydrodynamique, un embrayage de démarrage sec, un embrayage de démarrage humide, un embrayage magnétique à poudre ou un embrayage à force centrifuge.

27. Transmission de véhicule automobile à changement de rapport automatique selon l'une des revendications précédentes, **caractérisée en ce qu**'un élément de démarrage peut être disposé derrière la transmission, vue dans le sens du flux de force, l'arbre d'entrée (1) étant relié rigidement au vilebrequin d'un moteur.

28. Transmission de véhicule automobile à changement de rapport automatique selon la revendication 27, **caractérisée en ce que** le démarrage s'effectue au moyen d'un élément de commande (04) intégré dans la transmission.

29. Transmission de véhicule automobile à changement de rapport automatique selon l'une des revendications précédentes, **caractérisée en ce que** le troisième embrayage (24) par l'intermédiaire duquel le quatrième arbre (4) peut être relié à l'arbre de sortie (2) forme avec le troisième frein (04) un organe de retenue en côte pour la transmission, servant à bloquer l'arbre de sortie (2) sur le carter (G).

30. Transmission de véhicule automobile à changement de rapport automatique selon l'une des revendications précédentes, **caractérisée en ce qu**'un frein sans usure peut être monté sur chaque arbre.

31. Transmission de véhicule automobile à changement de rapport automatique selon l'une des revendications précédentes, **caractérisée en ce qu**'une prise de force peut être montée sur chaque arbre pour l'entraînement de groupes additionnels.

32. Transmission de véhicule automobile à changement de rapport automatique selon la revendication 31, **caractérisée en ce que** l'entrée (AN) de la transmission et la prise de force sont disposées sur le même côté de la transmission ou du carter (G).

33. Transmission de véhicule automobile à changement de rapport automatique selon l'une des revendications précédentes, **caractérisée en ce que** les éléments de commande (03, 04, 05, 14, 15, 45, 24) sont constitués par des embrayages ou freins qui commutent en charge.

34. Transmission de véhicule automobile à changement de rapport automatique selon la revendication 33, **caractérisée en ce que** des embrayages à disques, des freins à bande et/ou des embrayages à cône peuvent être utilisés.

35. Transmission de véhicule automobile à changement de rapport automatique selon l'une des revendications précédentes, **caractérisée en ce qu**'une machine électrique servant de génératrice et/ou de machine d'entraînement additionnelle peut en outre être montée sur chaque arbre de la transmission.
